# EUROPEAN PATENT APPLICATION

(11) **EP 3 799 022 A1**
(43) Date of publication of application: **31.03.2021**
(21) Application number: 20194272.9
(22) Date of filing: 03.09.2020
(51) Int. Cl.: G09G 3/34, G09G 3/36

(54) **DISPLAY APPARATUS AND CONTROL METHOD THEREOF**

(30) Priority: 25.09.2019 KR 20190117954
(71) Applicant: Samsung Electronics Co., Ltd., Gyeonggi-do 16677 (KR)
(72) Inventor: KIM, Hyungsuk, 16677 Gyeonggi-do (KR); KIM, Jongbin, 16677 Gyeonggi-do (KR); LEE, Youngmin, 16677 Gyeonggi-do (KR); JEON, Dukjin, 16677 Gyeonggi-do (KR); CHO, Byoung-Jin, 16677 Gyeonggi-do (KR); CHOI, Suk-Ju, 16677 Gyeonggi-do (KR)
(74) Representative: Taor, Simon Edward William

(57) **Abstract**

Disclosed herein is a display apparatus and a control method thereof. The display apparatus includes a liquid crystal panel, a backlight unit including a light source module including a plurality of light sources, the backlight unit including a light guide plate configured to guide light emitted from the light source module to the liquid crystal panel, and a controller configured to control the liquid crystal panel and the backlight unit, and each of the plurality of light sources includes a first light emitting diode (LED) configured to emit a first light and a second LED configured to emit a second light in a color different from a color of the first light, and the controller determines current values to be applied to the first LED and the second LED based on a picture mode.

## Description

### BACKGROUND

### 1. Field

The disclosure relates to a display apparatus and a control method thereof.

### 2. Description of the Related Art

Generally, a display apparatus is a kind of an output apparatus that visually displays obtained or stored image information to a user, and is used in various fields such as home or workplace.

The display apparatus includes a monitor apparatus connected to a personal computer or a server computer, a portable computer device, a navigation terminal device, a general television apparatus, an Internet Protocol television (IPTV), a portable terminal device such as a smart phone, a tablet PC, a personal digital assistant (PDA) or a cellular phone, various display apparatuses used to reproduce images such as advertisements or movies in an industrial field, or various kinds of audio/video systems.

The display panel includes pixels arranged in a matrix form and thin film transistors (TFTs) provided in each of the pixels. According to an image signal applied to the thin film transistors, an amount of light passing through the pixels and an amount of light emitted from the pixels may change. The display apparatus may display an image by adjusting the amount of light emitted from each of the pixels of the display panel.

The display panel, on which an image is displayed, is classified into a self-luminous display panel that emits light by itself and a non-self-luminous display panel that requires a separate light source.

The non-self-luminous display panel may include a liquid crystal display (LCD) panel. The LCD panel may include a backlight unit configured to emit light and a liquid crystal panel configured to block or transmit light emitted from the backlight unit.

Further, the display apparatus may be driven in various picture modes. For example, the display apparatus may be operated in a picture mode such as a standard mode or a movie mode. When a user views an image output through the display apparatus, the user may set the picture mode and thus the user may view an image with desired image and color quality.

However, in the conventional manner, it is required to control the LCD panel for adjusting the image and color quality. Particularly, in order to adjust the image and color quality according to the picture mode, it is required to adjust an RGB gain value of a color filter and to adjust opening and closing of a liquid crystal cell. In this case, a decrease in transmittance of the open cell may occur and it leads to the reduction in the optical characteristics such as luminance.

### SUMMARY

Therefore, it is an aspect of the disclosure to provide a display apparatus capable of adjusting the image and color quality according to a picture mode by providing two light emitting diodes (LED) configured to emit different colors as a single light source and by adjusting a current applied to each LED according to the picture mode, and a control method thereof.

It is another aspect of the disclosure to provide a display apparatus capable of preventing a hot spot, improving the image quality and luminance, and securing price competitiveness, by mounting two LEDs to regions adjacent to each other and by providing the two LEDs as a single package, and a control method thereof.

It is another aspect of the disclosure to provide a display apparatus capable of reducing power consumption, and improving the reliability of a display panel by directly controlling a light source to adjust the image and color quality according to a picture mode, and a control method thereof.

Additional aspects of the disclosure will be set forth in part in the description which follows and, in part, will be obvious from the description, or may be learned by practice of the disclosure.

In accordance with an aspect of the disclosure, a display apparatus includes a liquid crystal panel, a backlight unit including a light source module including a plurality of light sources, the backlight unit including a light guide plate configured to guide light emitted from the light source module to the liquid crystal panel, and a controller configured to control the liquid crystal panel and the backlight unit, and each of the plurality of light sources includes a first light emitting diode (LED) configured to emit a first light and a second LED configured to emit a second light in a color different from a color of the first light, and the controller determines current values to be applied to the first LED and the second LED based on a picture mode.

A color temperature of the first light may be higher than a color temperature of the second light.

The color temperature of the first light may be included in a first predetermined temperature range, and the color temperature of the second light may be included in a second predetermined temperature range lower than the first predetermined temperature range.

The controller may determine a first current value to be applied to the first LED and a second current value to be applied to the second LED based on a predetermined current ratio according to the picture mode.

When the picture mode is a dynamic mode, the controller may determine the first current value to be greater than the second current value based on a first current ratio.

When the picture mode is a standard mode, the controller may determine the first current value to be less than or equal to the second current value based on a second current ratio.

When the picture mode is a movie mode, the controller may determine the first current value to be less than the second current value based on a third current ratio.

Each of the first LED and the second LED may be provided as a single chip, and the first LED and the second LED may mounted in regions adjacent to each other, thereby forming the light source.

The first light may be a blue light and the second light may be a yellow light.

The backlight unit may further include a quantum dot film configured to convert the color of the first light.

In accordance with another aspect of the disclosure, a display apparatus includes a liquid crystal panel, a light source module arranged to face the liquid crystal panel and including a plurality of light sources, and a controller configured to control the light source module, and each of the plurality of light sources includes a first light emitting diode (LED) configured to emit a first light and a second LED configured to emit a second light in a color different from a color of the first light, and the controller determines current values applied to the first LED and the second LED based on a picture mode.

The light source module may further include a lens configured to diffuse or reflect the first light and the second light, the lens provided together with a light source, and each of the first LED and the second LED may be provided as a single chip, and the first LED and the second LED may be mounted in regions adjacent to each other, thereby forming the light source.

A color temperature of the first light may be included in a first predetermined temperature range, and a color temperature of the second light may be included in a second predetermined temperature range lower than the first predetermined temperature range.

The controller may determine a first current value to be applied to the first LED and a second current value to be applied to the second LED based on a predetermined current ratio according to the picture mode.

The first light may be a blue light and the second light may be a yellow light.

In accordance with another aspect of the disclosure, a control method for a display apparatus including a light source including a first light emitting diode (LED) configured to emit a first light and a second LED configured to emit a second light in a color different from a color of the first light, the control method includes identifying a picture mode, determining a first current value to be applied to the first LED and a second current value to be applied to the second LED based on the picture mode, and controlling the light source based on the determined first and second current values.

The determining of the first current value and the second current value may include determining the first current value to be applied to the first LED and the second current value to be applied to the second LED based on a predetermined current ratio according to the picture mode.

The determining of the first current value and the second current value may include, when the picture mode is a dynamic mode, determining the first current value to be greater than the second current value based on a first current ratio.

The determining of the first current value and the second current value may include, when the picture mode is a standard mode, determining the first current value to be less than or equal to the second current value based on a second current ratio.

The determining of the first current value and the second current value may include, when the picture mode is a movie mode, determining the first current value to be less than the second current value based on a third current ratio.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a view illustrating an exterior of a display apparatus according to an embodiment of the disclosure;
FIGS. 2 and 3 are views illustrating a picture mode and a method of setting the picture mode of the display apparatus according to an embodiment of the disclosure;
FIG. 4 is a view illustrating color temperatures and color coordinates corresponding to the picture mode of the display apparatus;
FIG. 5 is an exploded view of the display apparatus according to an embodiment of the disclosure;
FIG. 6 is a view illustrating an example of a liquid crystal panel included in the display apparatus according to an embodiment of the disclosure;
FIG. 7 is an exploded view of a backlight unit according to an embodiment of the disclosure;
FIG. 8 is a view illustrating a light source module according to an embodiment of the disclosure;
FIG. 9 is a view illustrating a relationship between color and a color temperature of light emitted from a light emitting diode (LED);
FIG. 10 is a view illustrating a state in which the backlight unit according to an embodiment of the disclosure further includes a quantum dot film;
FIG. 11 is a control block diagram of the display apparatus according to an embodiment of the disclosure;
FIG. 12 is a table illustrating a current ratio to be applied to each of two LEDs, which is provided as a single package, according to the picture mode;
FIG. 13 is an exploded view of a display apparatus according to another embodiment;
FIG. 14 is an exploded view of a backlight unit according to another embodiment;
FIG. 15 is a view illustrating a state in which the backlight unit according to another embodiment of the disclosure further includes a quantum dot film;
FIG. 16 is a view of a light source module according to another embodiment of the disclosure;
FIGS. 17 and 18 are flow charts schematically illustrating a control method of the display apparatus according to an embodiment of the disclosure; and
FIG. 19 is a flow chart specifically illustrating a control method of the display apparatus according to an embodiment of the disclosure.

### DETAILED DESCRIPTION

In the following description, like reference numerals refer to like elements throughout the specification. Well-known functions or constructions are not described in detail since they would obscure the one or more exemplar embodiments with unnecessary detail. Terms such as "unit", "module", "member", and "block" may be embodied as hardware or software. According to embodiments, a plurality of "unit", "module", "member", and "block" may be implemented as a single component or a single "unit", "module", "member", and "block" may include a plurality of components.

It will be understood that when an element is referred to as being "connected" another element, it can be directly or indirectly connected to the other element, wherein the indirect connection includes "connection via a wireless communication network".

Also, when a part "includes" or "comprises" an element, unless there is a particular description contrary thereto, the part may further include other elements, not excluding the other elements.

Throughout the description, when a member is "on" another member, this includes not only when the member is in contact with the other member, but also when there is another member between the two members.

It will be understood that, although the terms first, second, third, etc., may be used herein to describe various elements, but is should not be limited by these terms. These terms are only used to distinguish one element from another element.

As used herein, the singular forms "a," "an" and "the" are intended to include the plural forms as well, unless the context clearly indicates otherwise.

An identification code is used for the convenience of the description but is not intended to illustrate the order of each step. The each step may be implemented in the order different from the illustrated order unless the context clearly indicates otherwise.

Reference will now be made in detail to embodiments of the disclosure, examples of which are illustrated in the accompanying drawings.

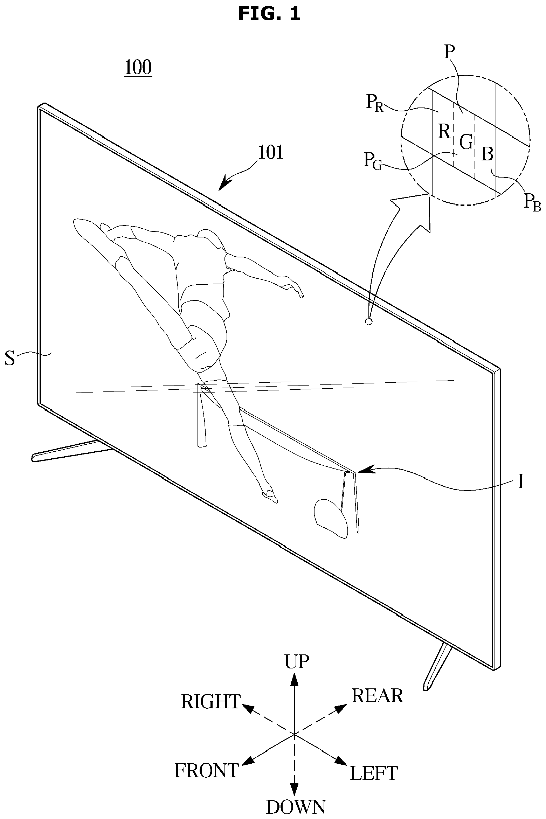

FIG. 1 is a view illustrating an exterior of a display apparatus according to an embodiment of the disclosure.

A display apparatus 100 is a device that processes an image signal received from the outside and visually displays the processed image. Hereinafter, a case in which the display apparatus 100 is a television is exemplified, but embodiments of the disclosure are not limited thereto. For example, the display apparatus 100 may be implemented in various forms such as a monitor, a portable multimedia device, a portable communication device, and a portable computing device, and the display apparatus 100 of embodiments is not limited in its shape as long as the display apparatus visually displays an image.

The display apparatus 100 may be a large format display (LFD) installed outdoors, such as a roof of a building or a bus stop. The installation location is not limited to the outdoors, and thus the LFD display apparatus according to an embodiment may be installed in any place, e.g. where the display apparatus is accessed by a large number of people, even indoors such as subway stations, shopping malls, movie theaters, companies, and stores.

The display apparatus 100 may receive a video signal and an audio signal from various content sources, and output video and audio corresponding to the video signal and the audio signal. For example, the display apparatus 100 may receive television broadcast content through a broadcast reception antenna or cable, receive content from a content playback device, or receive content from a content providing server of a content provider.

The display apparatus 100 may include a body 101 in which a plurality of components for displaying an image are included, and a screen S is provided on one side of the body 101 to display an image I.

The body 101 may form an appearance of the display apparatus 100, and the body 101 may include a component configured to allow the display apparatus 100 to display the image I. Although the body 101 shown in FIG. 1 is in the form of a flat plate, the shape of the body 101 is not limited thereto in embodiments. For example, the body 101 may have a shape in which left and right ends of the body 101 protrude forward and the central portion of the body 101 is curved so as to be concave.

The screen S may be formed on the front surface of the body 101, and the image I corresponding to visual information may be displayed on the screen S. For example, on the screen S, a still image or a moving image may be displayed and further, a two-dimensional plane image or a three-dimensional image may be displayed.

A plurality of pixels P may be formed on the screen S and the image I displayed on the screen S may be formed by a combination of lights emitted from the plurality of pixels P. For example, a single still image may be formed on the screen S by combining light emitted from the plurality of pixels P as a mosaic.

Each of the plurality of pixels P may emit different brightness and different color of light. In order to emit different brightness of light, each of the plurality of pixels P may include a component configured to directly emit light (e.g., an organic light emitting diode) or a component (e.g., a liquid crystal panel) configured to transmit or block light emitted by a backlight unit.

In order to emit light in the various colors, the plurality of pixels P may include sub-pixels P_{R}, P_{G}, and P_{B}. The sub-pixels may include a red sub pixel P_{R} emitting a red light, a green sub pixel P_{G} emitting a green light, and a blue sub pixel P_{B} emitting a blue light. For example, the red light may represent a light beam having a wavelength of approximately 620 nm (nanometers, one billionth of a meter) to 750 nm, the green light may represent a light beam having a wavelength of approximately 495 nm to 570 nm, and the blue light may represent a light beam having a wavelength of approximately 450 nm to 495 nm.

By combining the red light of the red sub pixel P_{R}, the green light of the green sub pixel P_{G} and the blue light of the blue sub pixel P_{B}, each of the plurality of pixels P may emit different brightness and different color of light.

The display apparatus 100 may include various types of display panels configured to display the image I. For example, the display apparatus 100 may include a liquid crystal display (LCD) panel or a light emitting diode (LED) panel, or an organic light emitting diode (OLED) panel. Hereinafter, an LCD panel will be described as an example of the display apparatus 100.

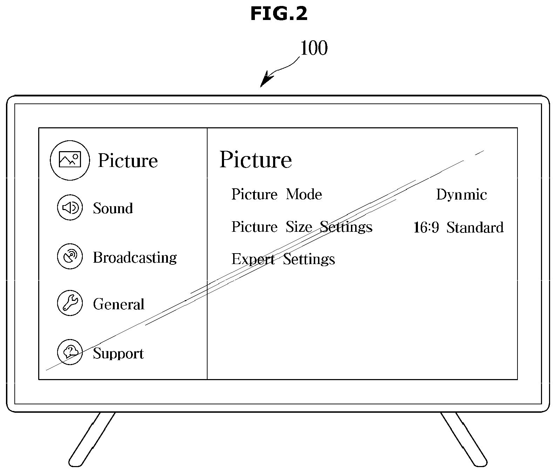

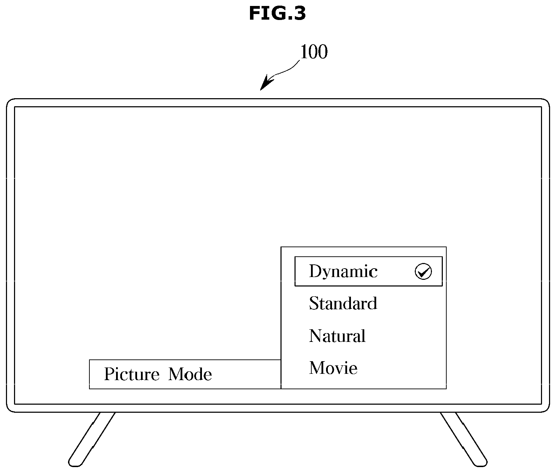

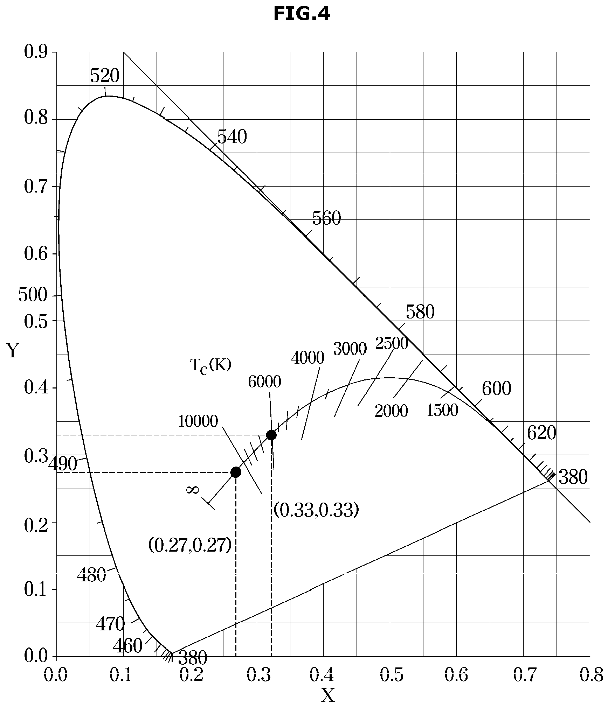

FIGS. 2 and 3 are views illustrating a picture mode and a method of setting the picture mode of the display apparatus according to an embodiment of the disclosure. FIG. 4 is a view illustrating color temperatures and color coordinates corresponding to the picture mode of the display apparatus.

Referring to FIGS. 2 and 3, the display apparatus 100 may display images in various picture modes. For example, the display apparatus 100 may display an image in a dynamic mode, a standard mode, a natural mode, or a movie mode. The picture mode is not limited thereto, and may be provided in various ways depending on the design in embodiments.

A user may select and/or set any one of picture modes provided in a setting menu of the display apparatus 100. The display apparatus 100 may display an image with image and color quality corresponding to the selected picture mode. In other words, the user can set a desired picture mode, and accordingly, the user can view an image with desired image and color quality.

Referring to FIG. 4, the picture mode may be set to change the overall color quality of an image displayed through the display apparatus 100. For example, the dynamic mode may be set to increase the color temperature of the image in order to display the image brighter and more clearly. The standard mode or the natural mode, which is a picture mode generally suitable for viewing at home, may be set to lower the brightness of the image and lower the color temperature than the dynamic mode. The movie mode corresponding to a picture mode suitable for watching a movie may be set to lower the brightness of the image and lower the color temperature than the standard mode or the natural mode. In addition, the movie mode may be applied to minimize fatigue to the user's eyes when the environment is dark.

As illustrated in FIG. 4, an approximate color coordinate range from the dynamic mode to the movie mode may be set from (0.27, 0.27) to (0.32, 0.33). That is, the color temperature of the screen may be set to be lowered from the dynamic mode, the standard mode/natural mode, to the movie mode. The range of color coordinates from the dynamic mode to the movie mode is not limited thereto, and may be changed according to design in embodiments.

However, as described above, in the conventional manner, the picture mode is implemented by controlling the liquid crystal panel. Particularly, to adjust the image and color quality according to the picture mode, it is required to adjust an RGB gain value of a color filter and to adjust opening and closing of a liquid crystal cell. In other words, in the conventional manner, the picture mode is implemented by controlling the arrangement of liquid crystal molecules included in the liquid crystal panel. Therefore, a decrease in transmittance of the open cell may occur and it may lead to the reduction in the optical characteristics such as luminance.

The display apparatus 100 and the control method of the display apparatus 100 of the disclosure may directly control the light source, instead of controlling a cell using a color filter of the liquid crystal panel. That is, the display apparatus 100 and the control method thereof may adjust the image and color quality of the displayed image according to the picture mode by providing two LEDs, which are configured to emit different colors of light, as a single light source and by adjusting a current applied to each LED according to the picture mode. Therefore, the display apparatus 100 and the control method thereof may not adjust a gain value of the open cell, thereby relieving the difficulty of the conventional manner and improving the image quality and luminance.

Hereinafter, the display apparatus 100 and the control method thereof will be described in detail.

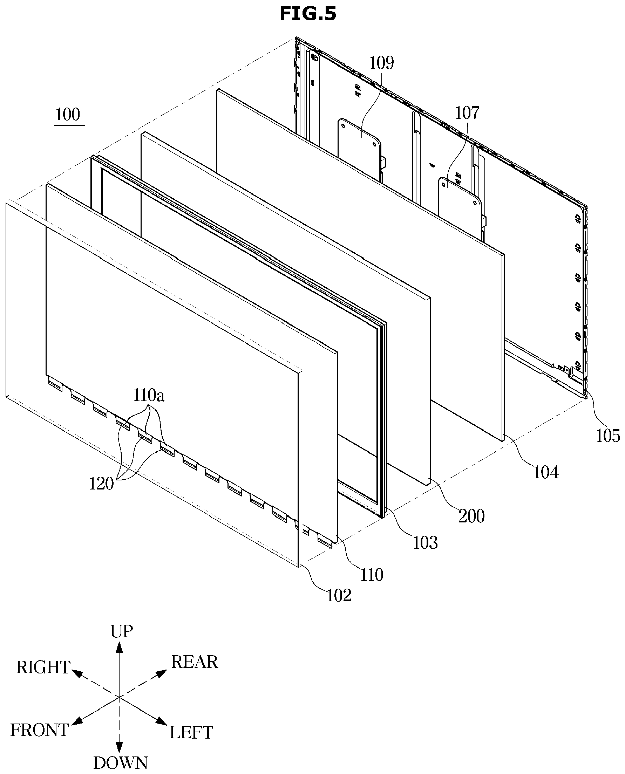

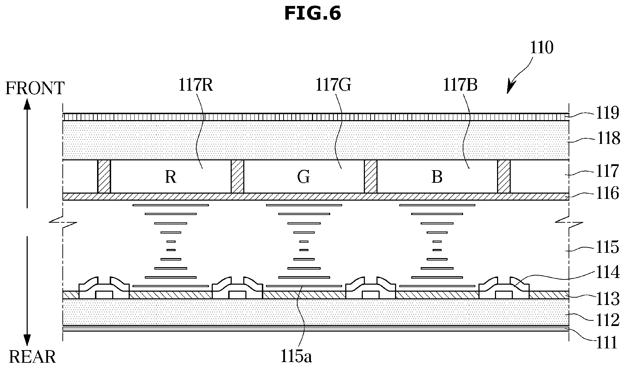

FIG. 5 is an exploded view of the display apparatus according to an embodiment of the disclosure. FIG. 6 is a view illustrating an example of a liquid crystal panel included in the display apparatus according to an embodiment of the disclosure.

Referring to FIG. 5, various components configured to generate the image I on the screen S may be provided in the body 101. Particularly, the body 101 may include a backlight unit 200 configured to emit surface light forward, a liquid crystal panel 110 configured to generate the image I by transmitting or blocking light emitted from the backlight unit 200, a control assembly 107 configured to control an operation of the backlight unit 200 and the liquid crystal panel 110, and a power assembly 109 configured to supply power to the backlight unit 200 and the liquid crystal panel 110. In addition, the body 101 includes a bezel 102, a frame middle mold 103, a bottom chassis 104 and a back cover 105. The bezel 102, the frame middle mold 103, the bottom chassis 104 and the back cover 105 support and fix the liquid crystal panel 110, the backlight unit 200, the control assembly 107 and the power assembly 109.

The front surface of the liquid crystal panel 110 may form the screen S of the display apparatus 100, and may include the plurality of pixels P. The plurality of pixels P included in the liquid crystal panel 110 may independently block or transmit light of the backlight unit 200. The light transmitted by the plurality of pixels P may form the image I displayed on the screen S.

Referring to FIG. 6, the liquid crystal panel 110 may include a first polarizing film 111, a first transparent substrate 112, a pixel electrode 113, a thin film transistor 114, a liquid crystal layer 115, and a common electrode 116, a color filter 117, a second transparent substrate 118, and a second polarizing film 119.

The first transparent substrate 112 and the second transparent substrate 118 may fix and support the pixel electrode 113, the thin film transistor (TFT) 114, the liquid crystal layer 115, the common electrode 116, and the color filter 117. The first transparent substrate 112 and the second transparent substrate 118 may be formed of tempered glass or transparent resin. On the outside of the first transparent substrate 112 and the second transparent substrate 118, the first polarizing film 111 and the second polarizing film 119 are provided. The first polarizing film 111 and the second polarizing film 119 respectively may transmit specific light beams and block other light beams.

The light may be composed of a pair of an electric field and a magnetic field that oscillate in a direction perpendicular to a traveling direction. The electric field and the magnetic field constituting the light may oscillate in all directions perpendicular to the traveling direction of light, and an oscillating direction of the electric field and an oscillating direction of the magnetic field may be perpendicular to each other.

For example, the first polarizing film 111 transmits light beams having a magnetic field oscillating in a first direction and blocks other light beams. In addition, the second polarizing film 119 transmits light beams having a magnetic field oscillating in a second direction and blocks other light beams. At this time, the first direction and the second direction may be orthogonal to each other. In other words, the oscillating direction of the light beams transmitted by the first polarizing film 111 and the oscillating direction of the light beams transmitted by the second polarizing film 119 are orthogonal to each other. As a result, generally, light beams may not pass through the first polarizing film 111 and the second polarizing film 119 at the same time.

The color filter 117 may be provided inside the second transparent substrate 118. The color filter 117 may include a red filter 117R transmitting a red light, a green filter 117G transmitting a green light, and a blue filter 117B transmitting a blue light, and the red filter 117R, the green filter 117G and the blue filter 117B may be arranged in parallel with each other.

A region where the color filter 117 is formed corresponds to the pixel P described above. In addition, a region where the red filter 117R is formed corresponds to the red sub pixel P_{R}, a region where the green filter 117G is formed corresponds to the green sub pixel P_{G}, and a region where the blue filter 117B is formed corresponds to the blue sub pixel P_{B}.

The thin film transistor (TFT) 114 is provided on the inner side of the first transparent substrate 112. Particularly, the thin film transistor 114 may be formed at a position corresponding to a boundary between the red filter 117R, the green filter 117G, and the blue filter 117B. The pixel electrode 113 may be provided on the inner side of the first transparent substrate 112, and the common electrode 116 may be provided on the inner side of the second transparent substrate 118. The pixel electrode 113 and the common electrode 116 may be formed of a conductive metal and may generate an electric field for changing the arrangement of liquid crystal molecules 115a forming the liquid crystal layer 115 described below.

The thin film transistor 114 may transmit or block the current flowing through the pixel electrode 113 described below. For example, an electric field may be formed or removed between the pixel electrode 113 and the common electrode 116 in accordance with the turning on (closing) or turning off (opening) of the thin film transistor 114. The thin film transistor 114 may be composed of a poly-silicon, and the thin film transistor 114 may be formed by a semiconductor process such as lithography, deposition, or ion implantation process.

The pixel electrode 113 may be separately formed in a region corresponding to the red filter 117R, the green filter 117G, and the blue filter 117B. The common electrode 116 may extend from one side of the liquid crystal panel 110 to the other side of the liquid crystal panel 100. In other words, the plurality of pixel electrodes arranged in the same row may share a single common electrode 116. As a result, an electric field may be selectively formed on the liquid crystal layer 115 according to the position of the pixel electrode 113.

The pixel electrode 113 and the common electrode 116 may be formed of a transparent material and transmit light incident from the outside. For example, the pixel electrode 113 and the common electrode 116 may be formed of indium tin oxide (ITO), indium zinc oxide (IZO), Ag nano wire, a carbon nano tube (CNT), graphene, or 3,4-ethylenedioxythiophene (PEDOT).

The liquid crystal layer 115 is formed between the pixel electrode 113 and the common electrode 116, and the liquid crystal layer 115 is filled with the liquid crystal molecules 115a. The liquid crystal represents an intermediate state between a solid (crystal) and a liquid. In general, when a solid material is heated, the state changes from a solid state to a transparent liquid state at the melting temperature. On the other hand, when a liquid crystal material in a solid state is heated, the liquid crystal material is changed into an opaque and turbid liquid at the melting temperature, and then changed into a transparent liquid state. Most of such liquid crystal materials are organic compounds, and their molecular shapes are elongated and rod-shapes. The arrangement of molecules may be in an irregular state in any direction, but may have a regular crystalline form in the other direction. As a result, the liquid crystal has both fluidity of liquid and optical anisotropy of crystal (solid).

The liquid crystal may also have optical properties depending on the change of the electric field. For example, the direction of the molecular arrangement of the liquid crystal may change depending on the change of the electric field. When an electric field is generated in the liquid crystal layer 115, the liquid crystal molecules 115a of the liquid crystal layer 115 may be arranged in the direction of the electric field and when an electric field is not generated in the liquid crystal layer 115, the liquid crystal molecules 115a may be arranged irregularly or arranged along an alignment layer (not shown). As a result, the optical properties of the liquid crystal layer 115 may vary depending on the presence of an electric field flowing in the liquid crystal layer 115.

For example, in the case of a twisted nematic (TN) liquid crystal panel, the liquid crystal molecules 115a are arranged in a spiral shape. When an electric field is not generated in the liquid crystal layer 115, light may pass through the liquid crystal panel 110 due to the arrangement of the liquid crystal molecules 115a. On the other hand, when an electric field is generated in the liquid crystal layer 115, the liquid crystal molecules 115a may be vertically disposed with respect to the transparent substrates 112 and 118, and light may not pass through the liquid crystal panel 110.

As another example, in the case of a vertical alignment (VA) liquid crystal panel, the liquid crystal molecules 115a are disposed perpendicular to the transparent substrates 112 and 118. When an electric field is not generated in the liquid crystal layer 115, light may not pass through the liquid crystal panel 110 due to the arrangement of the liquid crystal molecules 115a of the liquid crystal layer 115. On the other hand, when an electric field is formed in the liquid crystal layer 115, the liquid crystal molecules 115a may be disposed in parallel with the transparent substrates 112 and 118, and light may pass through the liquid crystal panel 110.

As another example, in the case of an In-Plane-Switching (IPS) liquid crystal panel, the liquid crystal molecules 115a may be disposed in parallel with the transparent substrates 112 and 118. In the case of the IPS liquid crystal display, both the pixel electrode 113 and the common electrode 116 may be provided on the first transparent substrate 112, and an electric field in the direction in parallel with the transparent substrates 112 and 118 may be formed on the liquid crystal layer 115. Depending on whether or not an electric field is generated on the liquid crystal side, light may pass through the liquid crystal panel 110 or be blocked by the liquid crystal panel 110.

Meanwhile, the detailed configuration of the liquid crystal panel 110 may be changed or may be implemented in other embodiments.

Referring again to FIG. 5, a cable 110a configured to transmit image data to the liquid crystal panel 110 and a display driver integrated circuit (DDI) 120 (hereinafter referred to as 'driver IC') configured to output an analog image signal by processing digital image data may be provided on one side of the liquid crystal panel 110.

The cable 110a may electrically connect the control assembly 107 and/or the power assembly 109 to the driver IC 120, and may also electrically connect the driver IC 120 to the liquid crystal panel 110. The cable 110a may include a flexible flat cable or a film cable.

The driver IC 120 may receive image data and power from the control assembly 107 and/or the power assembly 109 through the cable 110a, and may transmit image data and a driving current to the liquid crystal panel 110 through the cable 110a.

Further, the cable 110a and the driver IC 120 may be integrally implemented, and may be implemented as a film cable, chip on film (COF), or tape carrier packet (TCP). In other words, the driver IC 120 may be disposed on the cable 110a. However, the position of the driver IC 120 in embodiments is not limited thereto, and thus the driver IC 120 may be disposed on the liquid crystal panel 110.

The control assembly 107 may include a control circuit configured to control an operation of the liquid crystal panel 110 and the backlight unit 200. The control circuit may process image data received from an external content source, transmit the image data to the liquid crystal panel 110, and transmit dimming data to the backlight unit 200. The control assembly 107 may transmit dimming data including color dimming and luminance dimming to the backlight unit 200. Meanwhile, a controller 190 to be described later may be implemented as the control assembly 107.

The control assembly 107 and the power supply assembly 109 may be implemented with a printed circuit board and various circuits mounted on the printed circuit board. For example, the power supply assembly 109 may include a capacitor, a coil, a resistance element, and a processor, and a power supply circuit board on which the capacitor, the coil, the resistance element, and the processor are mounted. Further, the control assembly 107 may include a memory, a processor, and a control circuit board on which the memory and the processor are mounted.

The power assembly 109 may supply power to the backlight unit 200 to allow the backlight unit 200 to output surface light and the power assembly 109 may supply power to the liquid crystal panel 110 to allow the liquid crystal panel 110 to block or transmit the light of the backlight unit 200.

The control assembly 107 may control the power assembly 109 and adjust the current applied to the backlight unit 200. By adjusting the current applied to the backlight unit 200, an image corresponding to the picture mode may be displayed. In other words, the control assembly 107 may adjust the current applied to the backlight unit 200 based on the picture mode.

The backlight unit may be classified into an edge-type back light unit 200 and a direct-type back light unit 400 according to the position of the light source.

The backlight units 200 and 400 may include light sources 211 and 411 including first light emitting diodes (LEDs) 211 a and 411 a configured to emit a first light, and second light emitting diodes (LEDs) 211b and 411b configured to emit a second light in a color different from a color of the first light. The backlight units 200 and 400 may refract, reflect and scatter light emitted from the light sources 211 and 411 and then emit the light to the liquid crystal panel 110. Hereinafter, the configuration and operation of the backlight units 200 and 400 will be described in more detail.

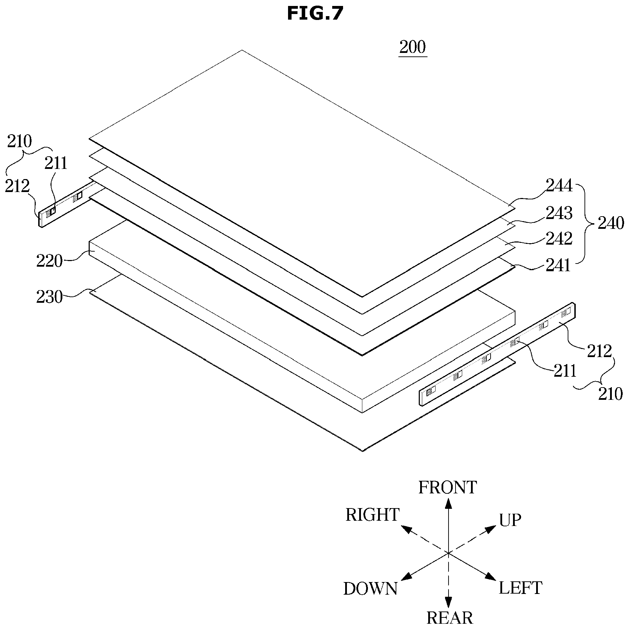

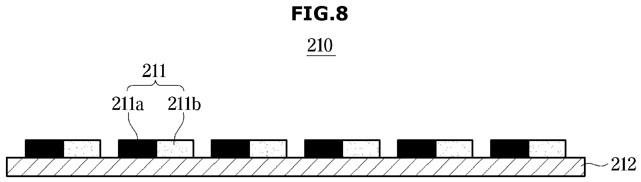

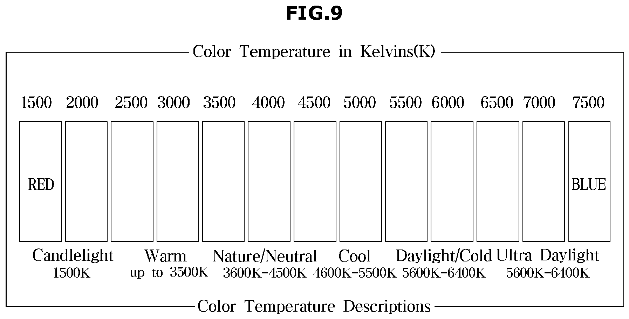

FIG. 7 is an exploded view of a backlight unit according to an embodiment. FIG. 8 is a view illustrating a light source module according to an embodiment of the disclosure. FIG. 9 is a view illustrating a relationship between color and a color temperature of light emitted from a light emitting diode (LED).

Referring to FIG. 7, the backlight unit 200 according to an embodiment corresponds to an edge-type back light unit. The backlight unit 200 may include a light source module 210 including the plurality of light sources 211, a light guide plate 220 configured to diffuse and/or guide light incident from the light source module 210, a reflective sheet 230 configured to reflect light emitted from a rear surface of the light guide plate 220, and an optical sheet 240 configured to refract and scatter light emitted from a front surface of the light guide plate 220.

Referring to FIG. 8, the light source module 210 may include a support 212 configured to support and fix the plurality of light sources 211. The light source module 210 may be disposed on a side surface of the light guide plate 220 and may emit light toward the center of the light guide plate 220.

The plurality of light sources 211 may be mounted at equal intervals on the support 212. For example, the plurality of light sources 211 may be mounted on the left and right sides of the light guide plate 220 at equal intervals, respectively. However, the light source 211 may be arranged at another location. For example, the plurality of light sources 211 may be disposed on only one of the left side surface or the right side surface of the light guide plate 220.

Each of the plurality of light sources 211 may include the first LED 211a configured to emit a first light and the second LED 211b configured to emit a second light in a color different from a color of the first light. Each of the first LED 211a and the second LED 211b may be provided as one chip, and the first LED 211a and the second LED 211b may be mounted in regions adjacent to each other, thereby forming a single light source 211. In other words, two LED chips may be packaged as a single light source 211. The first LED 211a and the second LED 211b may be disposed side by side to be in close contact with each other. In addition, a partition (not shown) is provided between the first LED 211a and the second LED 211b and thus a region in which the first LED 211a is mounted may be divided from a region in which the second LED 211b is mounted.

In this regard, in the conventional dual LED, each of the LEDs configured to emit different color of light may form a single light source, respectively, and a distance between the LEDs may be relatively great. Therefore, the hot spot phenomenon, in which the surrounding of the LED is locally very bright, may occur.

However, as illustrated in FIGS. 7 and 8, by mounting two LEDs 211a and 211b, which emit different colors of light, in the regions adjacent to each other, and by providing the two LEDs as a single package, the hot spot may be prevented. Accordingly, the image quality and luminance may be improved. In addition, because there is no need to add additional optical materials to prevent the hot spot, price competitiveness may be secured.

The first LED 211a and the second LED 211b may include different phosphors, and thus emit different colors of light. A color temperature of the first light emitted by the first LED 211a may be higher than a color temperature of the second light emitted by the second LED 211b. The color temperature is a measure of the color of light quantitatively. The unit of color temperature is Kelvin (K) of thermodynamic temperature.

The color temperature of the first light emitted by the first LED 211a may be included in a first predetermined temperature range, and the color temperature of the second light emitted by the second LED 211b may be included in a second predetermined temperature range lower than the first temperature predetermined range. For example, the first temperature range may be defined as 4600 K to 7000 K, and the second temperature range may be defined as 2700 K to 4500 K.

Referring to FIG. 9, the color of the first light may be defined as cool white, and the color of the second light may be defined as warm white. Meanwhile, because the color name corresponding to the color temperature in FIG. 9 is not limited thereto, it may be defined differently in other embodiments.

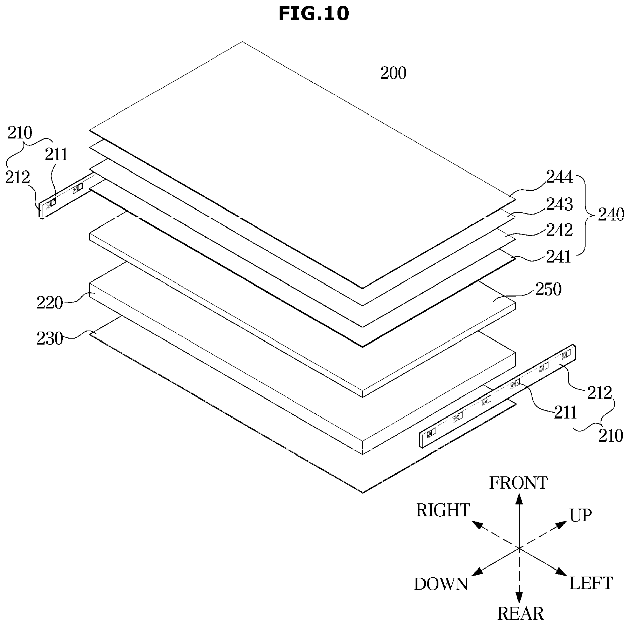

Alternatively, the first light emitted by the first LED 211a may be a blue light, and the second light emitted by the second LED 211b may be a yellow light. In this case, for example, the first LED 211 a may not include a phosphor, but the backlight unit 200 may further include a quantum dot film 250. The quantum dot film 250 is described in detail in FIG. 10 below.

The support 212 may fix the light source 211 to prevent the position of the light source 211 from changing. In addition, the current may be applied and power may be supplied to the first LED 211a and the second LED 211b through the support 212. The support 212 may be formed of a synthetic resin or a printed circuit board (PCB) including a conductive power supply line for supplying power to the plurality of light sources 211.

The support 212 may be disposed on the side surface of the light guide plate 220 together with the plurality of light sources 211. For example, the support 212 may be disposed on the left side of the light guide plate 220. Alternatively, the support 212 may be disposed at another location. For example, the support 212 may be disposed on the upper and lower sides of the light guide plate 220 or may be disposed on only one of the left side or the right side of the light guide plate 220.

Referring again to FIG. 7, the light guide plate 220 may change a traveling direction of light emitted from the plurality of light sources 211 disposed on the side surface, and emit the light toward the front. Particularly, the light emitted from the plurality of light sources 211 may be diffused from an edge portion of the light guide plate 220 to a central portion of the light guide plate 220, and as a result, the light guide plate 220 may emit uniform light toward the front.

A pattern for improving the straightness of light emitted from the plurality of light sources 211 may be formed on the front surface of the light guide plate 220. The pattern formed on the front surface of the light guide plate 220 may allow light emitted from the plurality of light sources 211 to go straight in an emission direction. For example, on the front surface of the light guide plate 220, a lenticular lens may be formed in a direction in which light is emitted from the plurality of light sources 211. The light emitted from the plurality of light sources 211 may go straight toward the central portion of the light guide plate 220 by the lenticular lens.

Light incident into the light guide plate 220 may travel in various directions according to an incident angle. For example, light incident toward the front of the light guide plate 220 may be totally reflected by the front surface of the light guide plate 220 and travel toward the central portion of the light guide plate 220. In addition, light incident toward the rear of the light guide plate 220 may be reflected by the reflective sheet 230 provided at the rear of the light guide plate 220 to travel toward the central portion of the light guide plate 220, or light incident toward the rear of the light guide plate 220 may be refracted (or scattered) by the reflective sheet 230 and then emitted through the front surface of the light guide plate 220. The light guide plate 220 may be formed of poly methyl methacrylate (PMMA) or transparent polycarbonate (PC).

The optical sheet 240 may include various sheets configured to improve the luminance or the uniformity of luminance of light emitted through the front surface of the light guide plate 220. For example, the optical sheet 240 may include a diffusion sheet 241, a first prism sheet 242, a second prism sheet 243, and a reflective polarizing sheet 244.

The diffusion sheet 241 may diffuse light to improve uniformity of luminance of light emitted through the front surface of the light guide plate 220. The light emitted from the plurality of light sources 211 may be diffused in the inside of the light guide plate 220 and diffused again by the diffusion sheet 241. Light may be diffused within the diffusion sheet 241 and then emitted obliquely. In other words, an emission angle, which indicates an angle between a normal line of the diffusion sheet 241 and the light emitted from the diffusion sheet 241, may be greater than an incident angle indicating an angle between light incident to the diffusion sheet 241 and the normal line of the diffusion sheet 241.

The first prism sheet 242 and the second prism sheet 243 may focus light emitted from the diffusion sheet 241. In other words, the first prism sheet 242 and the second prism sheet 243 may refract light emitted obliquely from the diffusion sheet 241 to travel toward the front.

The first prism sheet 242 and the second prism sheet 243 include a prism pattern having a triangular prism shape, and a plurality of prism patterns are arranged adjacent to each other to form a plurality of bands. A direction in which the prism patterns of the first prism sheet 242 are arranged and a direction in which the prism patterns of the second prism sheet 243 are arranged may be perpendicular to each other. The light passing through the first prism sheet 242 and the second prism sheet 243 may travel to the front side of the backlight unit 200 with a viewing angle of approximately 70 degrees. Accordingly, the luminance may be improved.

The reflective polarizing sheet 244 is a type of polarizing film, and may pass some beams of incident light and reflect other beams of the incident light. For example, light beams polarized in the same direction as a predetermined polarization direction of the reflective polarizing sheet 244 may pass, and light beams polarized in a direction different from the polarization direction of the reflective polarizing sheet 244 may be reflected.

The polarization direction of the reflective polarizing sheet 244 may be the same as the polarization direction of the first polarizing film 111 included in the liquid crystal panel 110 described above. As a result, the light passing through the reflective polarizing sheet 244 may also pass through the first polarizing film 111 included in the liquid crystal panel 110.

In addition, the light reflected by the reflective polarizing sheet 244 is recycled inside the backlight unit 200, and the luminance of the backlight unit 200 may be improved by the light recycle.

The configuration included in the optical sheet 240 is not limited to the above-described sheet or film, and may include various sheets such as protective sheets or films in embodiments. The stacking order of the diffusion sheet 241, the first prism sheet 242, the second prism sheet 243, and the reflective polarizing sheet 244 of embodiments is not limited to that shown in FIG. 7. The diffusion sheet 241, the first prism sheet 242, the second prism sheet 243, and the reflective polarizing sheet 244 may be stacked in various orders.

FIG. 10 is a view illustrating a state in which the backlight unit according to an embodiment of the disclosure further includes a quantum dot film.

Referring to FIG. 10, the backlight unit 200 may further include a quantum dot film 250. In FIG. 10, the light source module 210, the light guide plate 220, the reflective sheet 230 and the optical sheet 240 included in the backlight unit 200 are the same as described above.

The first light emitted by the first LED 211a included in the light source 211 may be a blue light, and the second light emitted by the second LED 211b may be a yellow light. In this case, the backlight unit 200 may further include the quantum dot film 250. The quantum dot film 250 may convert the color of the first light that is the blue light. The second light corresponding to the yellow light may pass through the quantum dot film 250 without the conversion.

Particularly, the quantum dot film 250 may be provided on the top (front) of the light guide plate 220. Accordingly, the quantum dot film 250 may be protected from the heat of the light source 211. Quantum dots which are semiconductor crystals each having a size of several nanometers may be dispersedly disposed in the inside of the quantum dot film 250. The quantum dots may receive the blue light and convert the blue light into different color of light.

The quantum dot may emit a short wavelength of light as the size is smaller, and emit a long wavelength of light as the size is larger. For example, a quantum dot with a diameter of 2 nm may emit the blue light, and a quantum dot with a diameter of approximately 10 nm may emit the red light. When various sizes of quantum dots are used, it is possible to output various wavelengths of light from the red light to the blue light.

The quantum dot film 250 increases the difference between the brightest part and the darkest part of the image, thereby implementing a high dynamic range (HDR) display. In addition, color reproducibility may be improved and power consumption may be reduced by the quantum dot film 250.

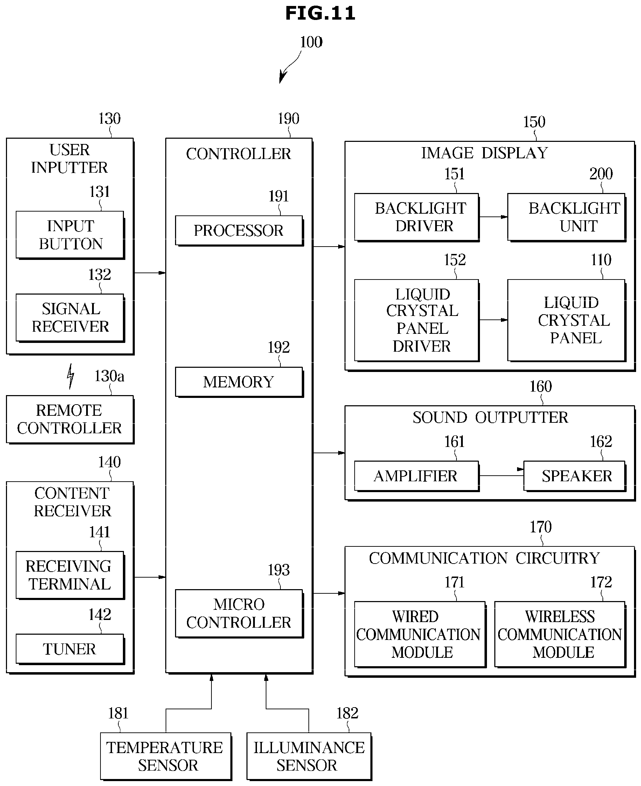

FIG. 11 is a control block diagram of the display apparatus according to an embodiment of the disclosure.

Referring to FIG. 11, the display apparatus 100 includes a user inputter 130 configured to obtain a user input from a user, a content receiver 140 configured to receive an image signal and/or an audio signal from content sources, an image display 150 configured to display image data, a sound outputter 160 configured to output sound, a communication circuitry 170 configured to communicate with the outside, a temperature sensor 181 configured to measure a temperature of the image display 150, an illumination sensor 182 configured to measure the external illumination of the display apparatus 100 and the controller 190 configured to process image data and/or audio signal received by the content receiver 140, and configured to control an operation of the display apparatus 100.

The user inputter 130 may include an input button 131 configured to obtain user input. For example, the user inputter 130 may include a power button for turning on or off the display apparatus 100, a sound control button for adjusting the volume of sound output by the display apparatus 100, and a source selection button for selecting a content source.

Each of the input buttons 131 may obtain a user input and output an electrical signal (voltage or current) corresponding to the user input to the controller 190, and may be implemented by a variety of input means such as push switches, touch switches, dials, slide switches, an toggle switches.

Further, the user inputter 130 includes a signal receiver 132 configured to receive a remote control signal of a remote controller 130a. The remote controller 130a configured to obtain user input may be provided separately from the display apparatus 100. The remote controller 130a may obtain a user input, and transmit a wireless signal corresponding to the user input to the display apparatus 100. The signal receiver 132 may receive a wireless signal from the remote controller 130a, and output an electrical signal (voltage or current) corresponding to the user input to the controller 190.

The content receiver 140 may include a receiving terminal 141 and a tuner 142 for receiving content including image data and/or audio signals from content sources.

The receiving terminal 141 may receive image data and audio signals from content sources through a cable. For example, the receiving terminal 141 may include a component (YPbPr/RGB) terminal, a composite video blanking and sync (CVBS) terminal, an audio terminal, a High Definition Multimedia Interface (HDMI) terminal, and a universal serial bus (USB) terminal.

The tuner 142 may receive a broadcast signal from a broadcast reception antenna or cable, and extract a broadcast signal of a channel selected by a user from the broadcast signals. For example, the tuner 142 may transmit a broadcast signal having a frequency corresponding to a channel selected by a user among a plurality of broadcast signals received through a broadcast reception antenna or a cable, and block a broadcast signal having a different frequency.

The content receiver 140 may receive an image signal and an audio signal from the content source through the receiving terminal 141 and/or the tuner 142, and transmit an image signal and an audio signal to the controller 190.

The image display 150 includes the backlight unit 200 and the liquid crystal panel 110 configured to visually display an image, a backlight driver 151 configured to drive the backlight unit 200, and a liquid crystal panel driver 152 configured to drive the liquid crystal panel 110.

The backlight driver 151 may control the backlight unit 200. The backlight driver 151 may control the light source module 210 under the control of the controller 190. The liquid crystal panel driver 152 may receive image data from the controller 190. The liquid crystal panel driver 152 may control the plurality of pixels P included in the liquid crystal panel 110 to allow the plurality of pixels P to transmit or block light depending on the image data. The liquid crystal panel driver 152 may control the liquid crystal panel 110 according to optical transmittance determined by the controller 190, and the liquid crystal panel driver 152 may display image data.

The sound outputter 160 includes a sound amplifier 161 configured to amplify sound, and a speaker 162 configured to acoustically output the amplified sound. The speaker 162 may convert an analog sound signal amplified by the sound amplifier 161 into sound (sound wave). For example, the speaker 162 may include a thin film configured to vibrate according to an electrical acoustic signal, and thus sound waves may be generated by vibration of the thin film.

The communication circuitry 170 includes a wired communication module 171 configured to communicate with an external device (e.g., a server) in a wired manner and a wireless communication module 172 configured to communicate with an external device in a wireless manner.

The wired communication module 171 may access a gateway through a cable connected from the display apparatus 100 to a gateway of the Internet service provider. For example, the wired communication module 171 may communicate with a gateway through Ethernet. The wired communication module 171 may exchange data with a communication network through a gateway.

The wireless communication module 172 may wirelessly communicate with an access point (AP) or user's gateway connected to a gateway of an Internet service provider. For example, the wireless communication module 172 may communicate with a connection relay through Wi-Fi, Bluetooth or ZigBee. The wireless communication module 172 may exchange data with a communication network through a connection relay and a gateway.

The temperature sensor 181 may measure the temperature of the backlight unit 200 and output an electrical signal (voltage or current) corresponding to the temperature of the backlight unit 200 to the controller 190. The temperature sensor 181 may include a thermistor in which an electrical resistance value changes according to temperature. The controller 190 may efficiently control the backlight unit 200 according to the detected temperature.

The illuminance sensor 182 may measure the external illuminance of the display apparatus 100 and output an electrical signal (voltage or current) corresponding to the external illuminance to the controller 190. The illuminance sensor 182 may include a photodiode configured to generate a current or voltage according to the amount of incident light. The controller 190 may adjust the luminance of the light emitted by the backlight unit 200 based on the detection value of the illuminance sensor 182 so as to reduce the gradation difference according to the viewing angle.

The controller 190 includes a processor configured to process a signal received by the content receiver 140 and to generate image data and sound data, a memory 192 configured to memorize and/or store programs and data needed for the operation of the display apparatus 100, and a micro controller 193 configured to control an operation of the display apparatus 100 in response to the user input received through the user inputter 130.

The processor 191 may process the image signal received by the content receiver 140 to generate image data, and process the audio signal received by the content receiver 140 to generate sound data. The image data and the sound data may be output through the image display 150 and the sound outputter 160, respectively. The processor 191 stores image data in the memory 192 in units of frames. The memory 192 may be a buffer.

The memory 192 may store programs and/or data for processing image data included in content, and may store temporary data generated while the processor 191 processes the image data. The memory 192 may include a non-volatile memory such as a read only memory (ROM) and a flash memory for storing data for a long time, and volatile memory such as a static random access memory (S-RAM), and a dynamic random access memory (D-RAM) for temporarily storing data.

The microcontroller 193 may control the display apparatus 100 in response to the user input received through the user inputter 130. For example, the microcontroller 193 may control the tuner 142 so that the tuner 142 extracts a broadcast signal of a channel, which is selected by the user input, in response to a user input for channel change. In addition, the microcontroller 193 may change the brightness, contrast, sharpness, color depth, color, gamma, color gamut, and saturation of the image in response to a user input.

Further, the microcontroller 193 may control the backlight unit 200 in response to an input of user who selects a picture mode. Particularly, the microcontroller 193 may determine a current value to be applied to each of the first LED 211a and the second LED 211b based on the picture mode, and then control the backlight unit 200 based on the determined current value. It may be understood that controlling the backlight unit 200 corresponds to controlling the light source module 210. The microcontroller 193 may determine a first current value to be applied to the first LED 211a and a second current value to be applied to the second LED 211b based on a predetermined current ratio according to the picture mode. The predetermined current ratio according to the picture mode is stored in the memory 192. The first LED 211a and the second LED 211b included in each of the plurality of light sources 211 may be controlled independently of each other.

Hereinafter, various embodiments in which the microcontroller 193 and/or the controller 190 regulate the current to be applied to the light source 211 according to the picture mode will be described. Meanwhile, the display apparatus 100 may further include various configurations in addition to the configurations described in FIG. 11, and each configuration may be separated or omitted.

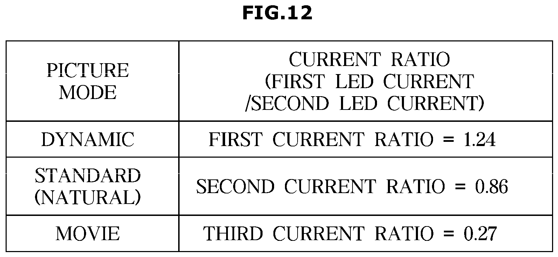

FIG. 12 is a table illustrating a current ratio to be applied to each of two LEDs, which is provided as a single package, according to the picture mode.

Referring to FIG. 12, the current value to be applied to the light source 211 according to the picture mode may be stored in the memory 192. In other words, the first current value to be applied to the first LED 211a according to the picture mode and the second current value to be applied to the second LED 211b according to the picture mode may be stored in the memory 192. Further, a ratio of the first current value to the second current value may be stored in the memory 192. For example, a current value to be applied to the light source 211 in the dynamic mode, a current value to be applied to the light source 211 in the standard mode or natural mode, and a current value to be applied to the light source 211 in the movie mode are stored in the memory 192.

When the picture mode of the display apparatus 100 is the dynamic mode, the controller 190 may determine a first current value to be applied to the first LED 211a and a second current value to be applied to the second LED 211b based on a first current ratio stored in the memory 192. The first current ratio may be 1.24. In this case, the first current value is determined to be greater than the second current value. For example, the first current value may be determined to be 180mA, and the second current value may be determined to be 145mA. Because the dynamic mode is a picture mode that displays an image brighter and more clearly, the current value to be applied to the first LED 211a is set to be high so as to increase emission of light having a high color temperature.

When the picture mode of the display apparatus 100 is the standard mode or the natural mode, the controller 190 may determine a first current value to be applied to the first LED 211a and a second current value to be applied to the second LED 211b based on a second current ratio. The second current ratio may be 0.86. In this case, the first current value is determined to be less than the second current value. For example, the first current value may be determined to be 125mA, and the second current value may be determined to be 145mA. Because the standard mode or the natural mode is a picture mode that lowers the brightness of the image and lowers the color temperature than the dynamic mode, the current value to be applied to the first LED 211a is set to be low so as to reduce the emission of light having a high color temperature.

Further, in the standard mode or the natural mode, the first current value and the second current value may be determined to be the same. However, even in this case, the first current value in the standard mode is determined to be less than the first current value in the dynamic mode.

When the picture mode of the display apparatus 100 is the movie mode, the controller 190 may determine a first current value to be applied to the first LED 211a and a second current value to be applied to the second LED 211b based on a third current ratio. The third current ratio may be 0.27. In this case, the first current value is determined to be less than the second current value. For example, the first current value may be determined to be 35mA, and the second current value may be determined to be 130mA. Because the movie mode is a picture mode that lowers the brightness of the image and lowers the color temperature than the standard mode or natural mode, the current value to be applied to the first LED 211a is set to be low so as to significantly reduce the emission of light having a high color temperature.

Further, the second current value to be applied to the second LED 211b in the movie mode may be determined to be less than the second current value in the dynamic mode or the standard mode. In other words, when comparing the current value to be applied to the light source 211 in each picture mode, the current value to be applied to the light source 211 in the movie mode is determined to be the smallest value. That is, the value decreases from the first current ratio in the dynamic mode, the second current ratio in the standard mode/natural mode, to the third current ratio in the movie mode. Therefore, the first current value and the second current value determined according to the third current ratio in the movie mode are determined to be less than the first current value and the second current value in other picture modes.

The controller 190 may control the light source module 210 so that the determined first current value and second current value are applied to the first LED 211a and the second LED 211b, respectively. The above-described current values and the current ratio shown in FIG. 12 are merely examples and thus may be changed according to design.

As described above, the display apparatus 100 may directly control the light source 211 to adjust the image and color quality according to the picture mode. In addition, because the light source 211 is directly controlled according to the picture mode, it is possible to reduce power consumption and improve reliability of the display panel.

In other words, the display apparatus 100 provides two LEDs 211a and 211b, which emit different colors of light, as a single light source 211, and adjusts the current to be applied to each LED according to the picture mode, thereby relieving difficulty of the conventional manner and thereby improving the image quality and luminance.

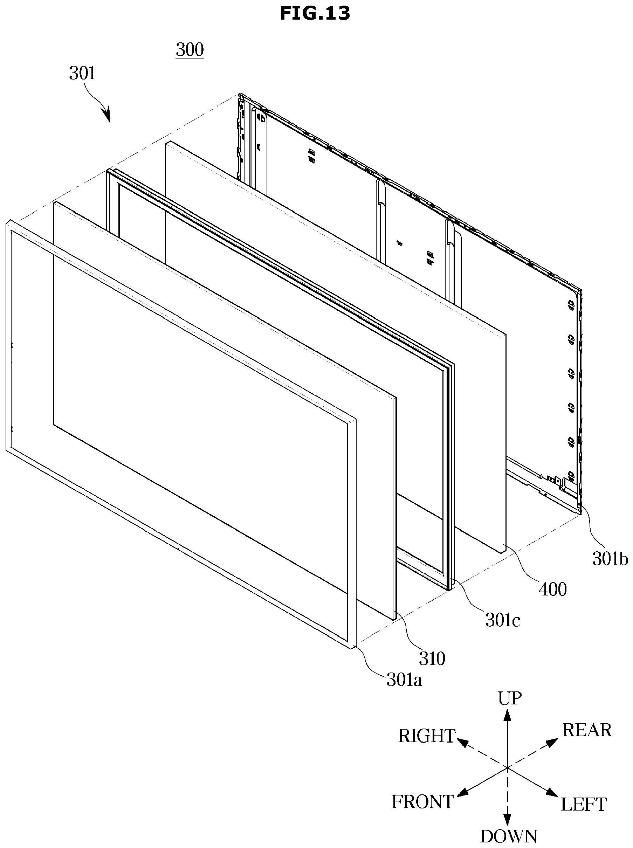

FIG. 13 is an exploded view of a display apparatus according to another embodiment.

Referring to FIG. 13, according to another embodiment of the disclosure, a display apparatus 300 may include a body 301 and a support (not shown) provided below the body 301 to support the body 301. The body 301 may form an appearance of the display apparatus 300, and the body 301 may be provided with a component for the display apparatus 300 to display an image or to perform various functions.

Various components configured to generate an image may be provided in the inside of the body 301. Particularly, the display apparatus 300 may include a backlight unit 400 configured to generate sheet light and emit the sheet light forward, and a liquid crystal panel 310 configured to generate an image using light emitted from the backlight unit 400.

The body 301 may include a front chassis 301a, a rear chassis 301b, and a mold frame 301c configured to support and fix the liquid crystal panel 310 and the backlight unit 400. The front chassis 301a is in the shape of a plate with an opening on the front side, and an image is displayed through the front side opening. The rear chassis 301b has a box shape in which the front surface is opened, and receives the liquid crystal panel 310 and the backlight unit 400 forming the display apparatus 300. The mold frame 301c may be provided between the front chassis 301a and the rear chassis 301b. Particularly, the mold frame 301c may be provided between the liquid crystal panel 310 and the backlight unit 400 to separate and fix the liquid crystal panel 310 and the backlight unit 400.

A description of the configuration the same as the display apparatus 100 according to an embodiment will be omitted.

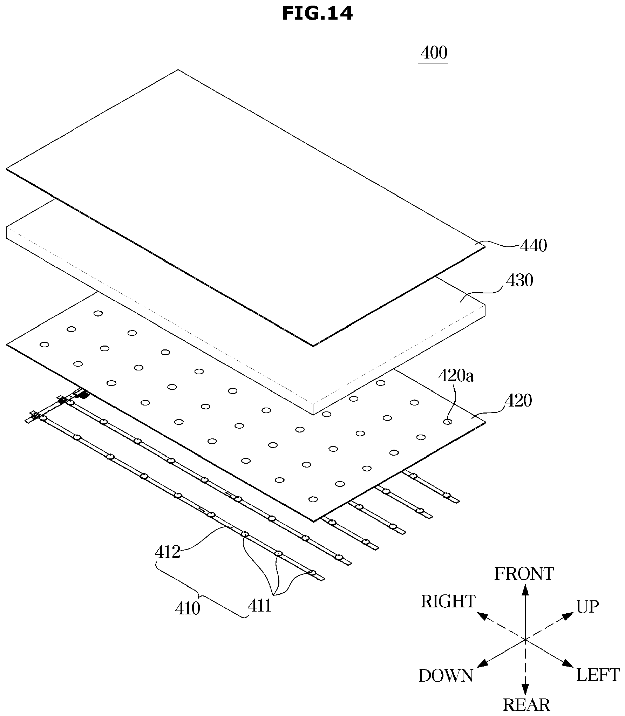

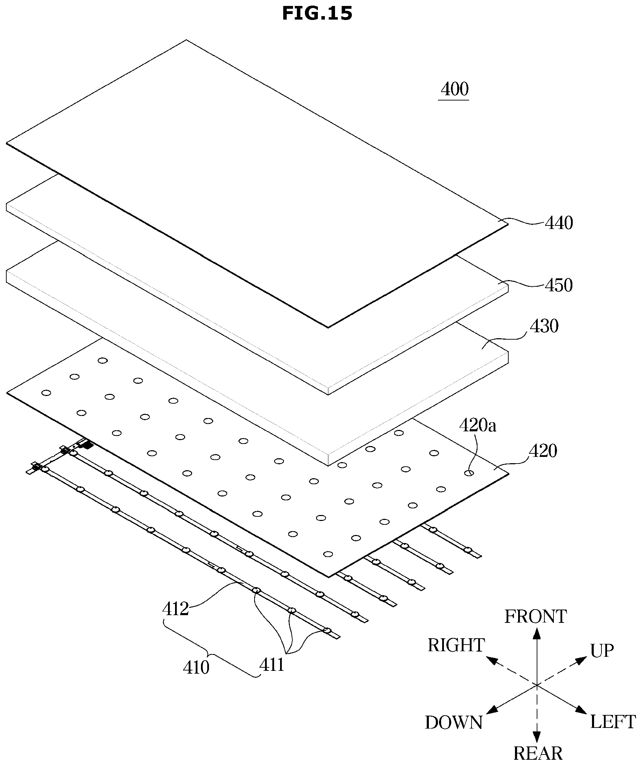

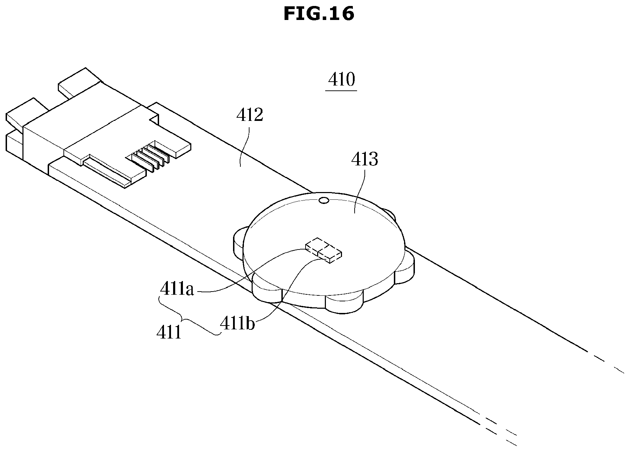

FIG. 14 is an exploded view of a backlight unit according to another embodiment of the disclosure. FIG. 15 is a view illustrating a state in which the backlight unit according to another embodiment of the disclosure further includes a quantum dot film. FIG. 16 is a view of a light source module according to another embodiment of the disclosure.

Referring to FIGS. 14 and 15, the display apparatus 300 according to another embodiment includes a direct-type back light unit. The direct type backlight unit 400 includes a light source module 410 configured to generate light, a reflective sheet 420 configured to reflect light, a diffuser plate 430 configured to disperse light, and an optical sheet 440 configured to increase light luminance.

The light source module 410 may be provided in plural at the rearmost of the backlight unit 400. The plurality of light source modules 410 may be disposed in parallel with each other to face the liquid crystal panel 310 and may emit light forward.

The light source module 410 includes a light source 411 including a first LED 411a configured to emit a first light and a second LED 411b configured to emit a second light in a color different from a color of the first light. In addition, the light source module 410 may include a plurality of light sources 411, and a support 412 configured to support and fix the plurality of light sources 411.

The plurality of light sources 411 may be mounted in a predetermined arrangement to have uniform luminance. For example, the plurality of light sources 411 may be mounted at equal intervals on the support 412. The shape in which the plurality of light sources 411 are disposed on the support 412 may vary.

Referring to FIG. 16, the light sources 411 may include the first LED 411a configured to emit the first light and the second LED 411b configured to emit the second light in the color different from the color of the first light. Each of the first LED 411a and the second LED 411b may be provided as a single chip, and the first LED 411a and the second LED 411b may be mounted in regions adjacent to each other, thereby forming a single light source 411. In other words, two LED chips may be packaged as a single light source 411.

The first LED 411a and the second LED 411b may be disposed side by side to be in close contact with each other. In addition, a partition (not shown) is provided between the first LED 411a and the second LED 411b and thus a region in which the first LED 411a is mounted may be divided from a region in which the second LED 411b is mounted.

The first LED 411a and the second LED 411b may include different phosphors, and thus emit different colors of light. A color temperature of the first light emitted by the first LED 411a may be higher than a color temperature of the second light emitted by the second LED 411b.

The color temperature of the first light emitted by the first LED 411a may be included in a first predetermined temperature range, and the color temperature of the second light emitted by the second LED 411b may be included in a second predetermined temperature range lower than the first temperature predetermined range. For example, the first temperature range may be defined as 4600 K to 7000 K, and the second temperature range may be defined as 2700 K to 4500 K.

The first light emitted by the first LED 411a may be a blue light, and the second light emitted by the second LED 411b may be a yellow light. In this case, the first LED 411a may not include a phosphor, but the backlight unit 400 may further include a quantum dot film 450.

In addition, the light source module 410 may further include a lens 413 configured to diffuse or reflect the first light and the second light, and provided with the light source 411. The lens 413 may be provided in front of the support 412. The lens 413 may include a diffusing type lens configured to diffuse light emitted from the light source 411 or a reflective lens configured to reflect light emitted from the light source 411. A diffusion type lens is illustrated in FIG. 16.

The support 412 may fix the plurality of light sources 411 to prevent the position of the light source 411 from changing. In addition, the support 412 may supply power to the light source 411. That is, the current may be applied and power may be supplied to the first LED 411a and the second LED 411b through the support 412. The support 412 may be formed of a synthetic resin or formed with a printed circuit board (PCB) including a conductive power supply line for supplying power to the plurality of light sources 411.

Referring again to FIG. 14, the reflective sheet 420 is provided at the front of the light source module 410 and may reflect light, which travels to the rear of the backlight unit 400, to the front side.

On the reflective sheet 420, through holes 420a are formed at positions corresponding to the light sources 411. In addition, the light sources 411 may pass through the through holes 420a and protrude toward the front of the reflective sheet 420. Because the light sources 411 emit light in various directions toward the front of the reflective sheet 420, some of the light beams emitted from the light sources 411 may travel rearward. A reflective film included in the reflective sheet 420 may reflect light, which is emitted rearward from the light sources 411, to the front side.

The diffuser plate 430 may be arranged in front of the light source module 410 and the reflective sheet 420, and may evenly distribute light emitted from the light source 411 of the light source module 410.

The light source 411 is placed in various positions on the rear side of the backlight unit 400. Although the plurality of light sources 411 are arranged at equal intervals on the rear surface of the backlight unit 400, unevenness of the luminance may occur according to the positions of the light sources 411. The diffuser plate 430 may diffuse the light, which is emitted from the light source 411, in the diffuser plate 430 so as to remove the unevenness of the luminance caused by the light source 411. In other words, the diffuser plate 430 may uniformly emit light, which is incident from the light source 411, to the front surface.

The diffuser plate 430 may be formed of a poly methyl methacrylate (PMMA) or a polycarbonate (PC) to which a diffusion agent for light diffusion is added.

The optical sheet 440 may include various sheets for improving luminance and uniformity of luminance. For example, the optical sheet 440 may include the above mentioned diffusion sheet, first prism sheet, second prism sheet, and reflective polarizing sheet.

Referring to FIG. 15, the backlight unit 400 may further include a quantum dot film 450. The quantum dot film 450 may be provided between the diffusion plate 430 and the optical sheet 440.

The first light emitted by the first LED 411a included in the light source 411 may be a blue light, and the second light emitted by the second LED 411b may be a yellow light. In this case, the backlight unit 400 may further include the quantum dot film 450. The quantum dot film 450 may convert the color of the first light that is the blue light. The second light, which is yellow light, may pass through the quantum dot film 450 without the conversion.

In addition, the backlight unit 400 may include various sheets.

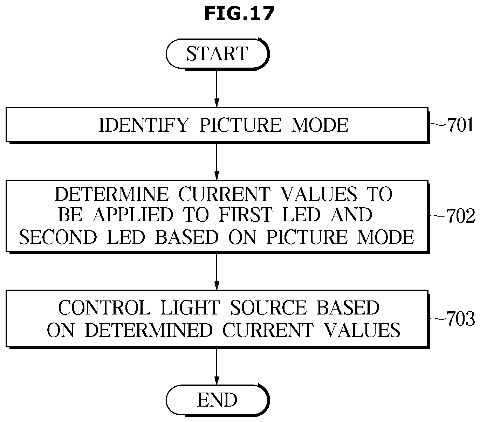

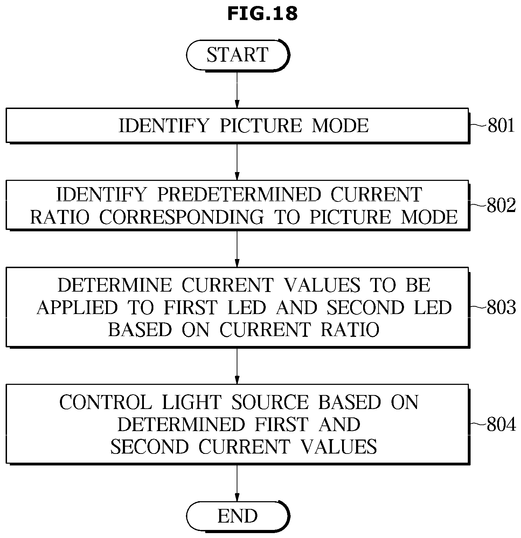

FIGS. 17 and 18 are flow charts schematically illustrating a control method of the display apparatus according to an embodiment of the disclosure.

Referring to FIG. 17, the controller 190 of the display apparatus 100 according to an embodiment may identify a picture mode of the display apparatus 100 (701). The controller 190 may determine a current value to be applied to each of the first LED 211a and the second LED 211b based on the picture mode of the display apparatus 100 (702). In addition, the controller 190 may control the backlight unit 200 based on the determined current value (703). It may be understood that controlling the backlight unit 200 corresponds to controlling the light source module 210.

Referring to FIG. 18, the controller 190 of the display apparatus 100 according to an embodiment may identify a picture mode of the display apparatus 100 (801). In addition, the controller 190 may identify a predetermined current ratio corresponding to the picture mode (802), and based on the predetermined current ratio, the controller 190 may determine the first current value to be applied to the first LED 211a and the second current value to be applied to the second LED 211b (803). The controller 190 may control the light source module 210 based on the first current value and the second current value (804).

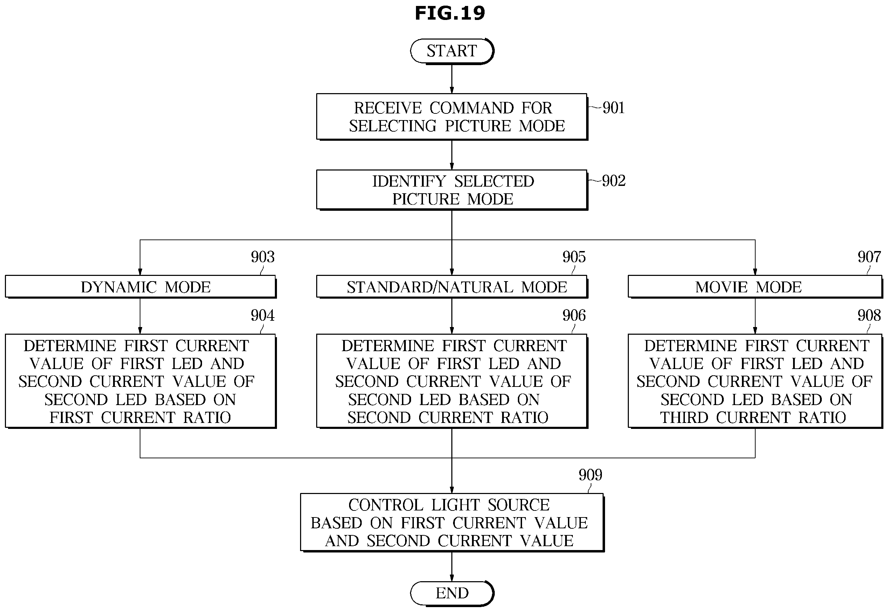

FIG. 19 is a flow chart specifically illustrating a control method of the display apparatus according to an embodiment of the disclosure.

Referring to FIG. 19, the display apparatus 100 according to an embodiment may receive a command for selecting a picture mode (901). The command for selecting the picture mode may be received through the user inputter 130. The controller 190 of the display apparatus 100 according to an embodiment may identify the selected picture mode (902).

When the picture mode of the display apparatus 100 is the dynamic mode (903), the controller 190 may determine the first current value to be applied to the first LED 211a and the second current value to be applied to the second LED 211b based on the first current ratio stored in the memory 192 (904).

In addition, when the picture mode of the display apparatus 100 is the standard mode or the natural mode (905), the controller 190 may determine the first current value to be applied to the first LED 211a and the second current value to be applied to the second LED 211b based on the second current ratio (906).

In addition , when the picture mode of the display apparatus 100 is the movie mode (907), the controller 190 may determine the first current value to be applied to the first LED 211a and the second current value to be applied to the second LED 211b based on the third current ratio (908).

The controller 190 may control the light source module 210 based on the first current value and the second current value (909). In other words, the controller 190 may control the light source module 210 to allow the determined first and second current values to be applied to the first LED 211a and the second LED 211b, respectively.

The display apparatus 400 according to another embodiment may be operated in the same manner as the display apparatus 100 according to an embodiment because the type of the backlight unit is only different from that of the display apparatus 100 according to an embodiment.

As discussed, embodiments can provide a display apparatus comprising: a liquid crystal panel; a backlight unit comprising a light source module comprising a plurality of light sources, the backlight unit comprising a light guide plate configured to guide light emitted from the light source module to the liquid crystal panel; and a controller configured to control the liquid crystal panel and the backlight unit, wherein each of the plurality of light sources comprises a first light emitting diode, LED, configured to emit a first light and a second LED configured to emit a second light in a color different from a color of the first light, and wherein the controller is configured to determine current values to be applied to the first LED and the second LED based on a picture mode.

The picture mode may be one of several picture modes, with different picture modes having a different color temperature.

The controller may be configured to change a color temperature of light output by the liquid crystal panel by changing a ratio of the current value of the first light to the current value of the second light.

Changing a ratio of the current value of the first light to the current value of the second light may vary the color temperature of the backlight unit.

The first and second light may both be white light with different color temperatures. For example, the first light may be cool white, and the color of the second light may be warm white.

The color temperature of the first light may be included in a first predetermined temperature range, and the color temperature of the second light emitted may be included in a second predetermined temperature range lower than the first temperature predetermined range. For example, the first temperature range may be defined as 4600 K to 7000 K, and the second temperature range may be defined as 2700 K to 4500 K.

The first light may be a blue light, and the second light emitted may be a yellow light.

The controller may be configured to change a color temperature of light output by the liquid crystal panel by changing a ratio of the current values of the first light and second light according to a picture mode.

The picture mode may be set to change the overall color quality of an image displayed through the display apparatus. For example, a dynamic mode may be set to increase the color temperature of the image in order to display the image brighter and more clearly. The standard mode or the natural mode, which is a picture mode generally suitable for viewing at home, may be set to lower the color temperature than the dynamic mode. The movie mode corresponding to a picture mode suitable for watching a movie may be set to lower the color temperature than the standard mode or the natural mode.

Embodiments may provide a control method for a display apparatus comprising a light source comprising a first light emitting diode, LED, configured to emit a first light and a second LED configured to emit a second light in a color different from a color of the first light, the control method comprising: identifying a picture mode; determining a first current value to be applied to the first LED and a second current value to be applied to the second LED based on the picture mode; and controlling the light source based on the determined first and second current values.

As is apparent from the above description, the display apparatus and the control method thereof may adjust the image and color quality according to a picture mode by providing two light emitting diodes (LED), which emit different colors, as a single light source and by adjusting a current applied to each LED according to the picture mode.

In addition, the display apparatus and the control method thereof may prevent a hot spot, improve the image quality and luminance, and secure price competitiveness, by mounting two LEDs to regions adjacent to each other and by providing the two LEDs as a single package.

In addition, the display apparatus and the control method thereof may reduce power consumption, and improve the reliability of a display panel by directly controlling a light source to adjust the image and color quality according to a picture mode.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer-readable recording medium includes all kinds of recording media in which instructions which can be decoded by a computer are stored. For example, there may be a Read Only Memory (ROM), a Random Access Memory (RAM), a magnetic tape, a magnetic disk, a flash memory, and an optical data storage device. The computer-readable recording medium may be given in the form of a non-transitory storage medium. Here, the term 'non-transitory' means that the storage medium is tangible excluding a signal (e.g. an electromagnetic wave), and does not distinguish between a case where data is semi-permanently stored in the storage medium and a case where data is transitorily stored in the storage medium.

Although a few embodiments of the present disclosure have been shown and described, it would be appreciated by those skilled in the art that changes may be made in these embodiments without departing from the principles of the disclosure, the scope of which is defined in the claims and their equivalents.

**Description of symbols**

| | |
|---|---|
| 100, 300: display apparatus | 101, 301: main body |
| 102: bezel | 103: mid mold |
| 104: bottom chassis | 105: rear cover |
| 110, 310: liquid crystal panel | 120: driver IC |
| 107: control assembly | 109: power assembly |
| 200, 400: backlight unit | 210, 410: light source module |
| 220: light guide plate | 230: reflective sheet |
| 240: optical sheet | 301a: front chassis |
| 301b: rear chassis | 301c: mold frame |
| 420: reflective sheet | 430: diffuser plate |
| 440: optical sheet | |

## Claims

1. A display apparatus comprising:
a liquid crystal panel;
a backlight unit comprising a light source module comprising a plurality of light sources, the backlight unit comprising a light guide plate configured to guide light emitted from the light source module to the liquid crystal panel; and
a controller configured to control the liquid crystal panel and the backlight unit,
wherein each of the plurality of light sources comprises a first light emitting diode, LED, configured to emit a first light and a second LED configured to emit a second light in a color different from a color of the first light, and
wherein the controller is configured to determine current values to be applied to the first LED and the second LED based on a picture mode of the display apparatus.

2. The display apparatus of claim 1, wherein a color temperature of the first light is higher than a color temperature of the second light.

3. The display apparatus of claim 2, wherein the color temperature of the first light is included in a first predetermined temperature range, and the color temperature of the second light is included in a second predetermined temperature range lower than the first predetermined temperature range.

4. The display apparatus of claim 2, wherein the controller is configured to determine a first current value to be applied to the first LED and a second current value applied to the second LED based on a predetermined current ratio according to the picture mode.

5. The display apparatus of claim 4, wherein when the picture mode is a dynamic mode, the controller is configured to determine the first current value to be greater than the second current value based on a first current ratio.

6. The display apparatus of claim 4, wherein when the picture mode is a standard mode, the controller is configured to determine the first current value to be less than or equal to the second current value based on a second current ratio.

7. The display apparatus of claim 4, wherein when the picture mode is a movie mode, the controller is configured to determine the first current value to be less than the second current value based on a third current ratio.

8. The display apparatus of claim 1, wherein each of the first LED and the second LED is provided as a single chip, and the first LED and the second LED are mounted in regions adjacent to each other, thereby forming a light source.

9. The display apparatus of claim 1, wherein the first light is a blue light and the second light is a yellow light.

10. The display apparatus of claim 9, wherein the backlight unit further comprises a quantum dot film configured to convert the color of the first light.

11. A control method for a display apparatus comprising a light source comprising a first light emitting diode, LED, configured to emit a first light and a second LED configured to emit a second light in a color different from a color of the first light, the control method comprising:
identifying a picture mode of the display apparatus;
determining a first current value to be applied to the first LED and a second current value to be applied to the second LED based on the picture mode; and
controlling the light source based on the determined first and second current values.

12. The control method of claim 11, wherein the determining the first current value and the second current value comprises determining the first current value to be applied to the first LED and the second current value to be applied to the second LED based on a predetermined current ratio according to the picture mode.

13. The control method of claim 12, wherein the determining the first current value and the second current value comprises, when the picture mode is a dynamic mode, determining the first current value to be greater than the second current value based on a first current ratio.

14. The control method of claim 12, wherein the determining the first current value and the second current value comprises, when the picture mode is a standard mode, determining the first current value to be less than or equal to the second current value based on a second current ratio.

15. The control method of claim 12, wherein the determining the first current value and the second current value comprises, when the picture mode is a movie mode, determining the first current value to be less than the second current value based on a third current ratio.
